# EUROPÄISCHE PATENTSCHRIFT

(11) **EP 1 243 455 B1**
(45) Veröffentlichungstag und Bekanntmachung des Hinweises auf die Patenterteilung: **20.06.2007**
(21) Anmeldenummer: 02002608.4
(22) Anmeldetag: 05.02.2002
(51) Int. Cl.: B60K 11/08

(54) **Luftführungskanal für ein Kraftfahrzeug**
Air flow channel for motor vehicle
Canal de conduit d'air pour véhicule automobile

(30) Priorität: 22.03.2001 DE 10114058
(43) Veröffentlichungstag der Anmeldung: 25.09.2002
(73) Patentinhaber: Dr.Ing. h.c. F. Porsche Aktiengesellschaft, 70435 Stuttgart (DE)
(72) Erfinder: Palmer, Eberhard, 71665 Vaihingen (DE)

(56) Entgegenhaltungen:
- EP-A- 0 855 496
- US-A- 5 915 490
- US-A- 5 918 663

## Beschreibung

Die Erfindung betrifft einen Luftführungskanal für ein Kraftfahrzeug, der sich zwischen zumindest einer an einem Karosserieaußenhautteil ausgebildeten Öffnung und einem mit Abstand dazu angeordneten Kühler erstreckt.

Herkömmlicherweise werden Luftführungskanäle für Kraftfahrzeuge aus sperrigem Kunststoff, beispielsweise aus PP, gefertigt. Hierzu werden kostenintensive Werkzeuge benötigt, die Luftführungskanäle sind relativ schwer und teuer. Siehe z.B. die US- 5 918 663-A.

Aus der EP 0 855 496 A1 ist eine Abgasanlage mit einem flexiblen Schlauch bekannt, der zwischen Abgasschalldämpfern angeordnet ist.

Aufgabe der Erfindung ist es, einen Luftführungskanal für ein Kraftfahrzeug zu schaffen, der einfach und kostengünstig herstellbar ist, ein verringertes Gewicht aufweist und einfacher an den vorhandenen Aggregateraum anpassbar ist.

Erfindungsgemäß wird diese Aufgabe durch die Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß der aus einem innen- oder außerseitigen Rahmengestell und einer äußeren Hülle aus luftundurchlässigem Material bestehende Luftführungskanal bei deutlich reduziertem Gewicht einfach und kostengünstig herstellbar ist. Darüber hinaus ist dieser Luftführungskanal einfacher an den vorhandenen Aggregateraum anpaßbar. Das innere Rohrgestell kann aus Leichtmetall oder dgl. gefertigt sein. Die äußere Hülle besteht beispielsweise aus einem stoffähnlichen Gewebe aus Synthesefaser oder dgl., wobei die verwendeten Werkstoffe luftundurchlässig und bis ca. 130°C temperaturbeständig sein müssen. Auch kann der Luftführungskanal nur aus einem gespannten Material ohne Rohrgestell gebildet sein.

Ein Ausführungsbeispiel der Erfindung ist in den Zeichnungen dargestellt und wird im folgenden näher beschrieben.

Es zeigen:
- Fig. 1: in Explosionsdarstellung ein Karosserieaußenhautteil eines Kraftfahrzeuges mit zumindest einer Öffnung, einen zwischengeschalteten Luftführungskanal und einen nachfolgenden Kühler und
- Fig. 2: eine perspektivische Darstellung von schräg vorne auf ein inneres Rohrgestell, wobei bereichsweise die äußere Hülle angedeutet ist.

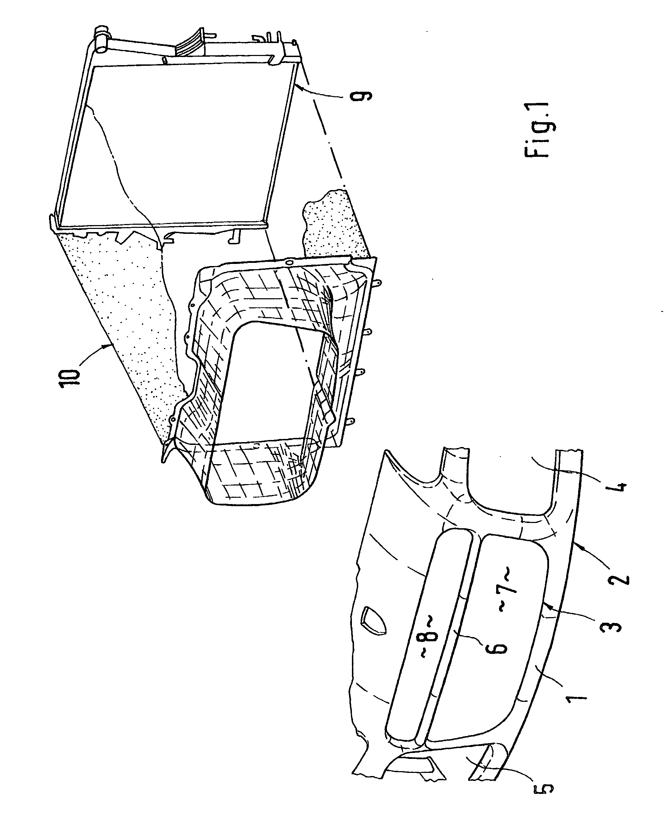

In Fig. 1 ist ein durch ein Bugendteil 1 gebildetes Karosserieaußenhautteil 2 eines Kraftfahrzeuges dargestellt, das eine mittige Öffnung 3 und seitliche Öffnungen 4, 5 für den Lufteintritt aufweist. Die mittige Öffnung 3 ist im Ausführungsbeispiel durch einen querverlaufenden etwa horizontal ausgerichteten Steg 6 in zwei übereinanderliegende Öffnungsabschnitte 7, 8 unterteilt. Entfernt vom Bugendteil 1 ist zumindest ein Kühler 9 angeordnet, der in herkömmlicher Weise am Kraftfahrzeug gelagert ist.

Zwischen zumindest einer der Öffnungen 3, 4, 5 und dem Kühler 9 erstreckt sich ein langgestreckter Luftführungskanal 10, der erfindungsgemäß aus einem inneren oder äußeren Gestell 11, wie ein Rohrgestell oder einem Stützelement und einer Hülle 12 aus luftundurchlässigem elastischem Material besteht. Das Rohrgestell 11 umfaßt zwei beabstandet angeordnete über Streben 13, 14, 15, 16 miteinander verbundene endseitige Rahmenabschnitte 17, 18. Das Stützelement kann aus Bändern, Streben oder dgl. bestehen.

Der in Fahrtrichtung A gesehen vordere Rahmenabschnitt 17 des Gestells 11 verläuft benachbart der Innenseite der Öffnungen 3, 4, 5 des Karosserieaußenhautteiles 2 und ist mit diesem oder dem angrenzenden Aufbau in geeigneter Weise durch Schrauben, Klipsen oder dgl. verbunden.

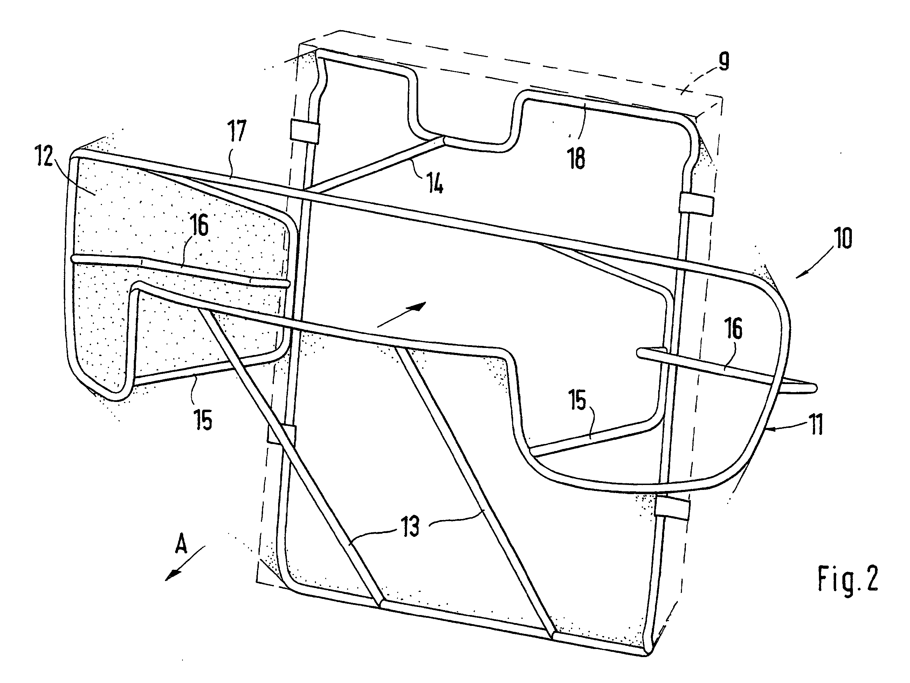

Der hintere Rahmenabschnitt 18 ist dem Kühler 9 vorgelagert und mit diesem örtlich verbunden. Die beiden unteren Streben sind mit dem Bezugszeichen 13 versehen, wogegen die mittige obere Strebe das Bezugszeichen 14 aufweist. Ferner zeigt Fig. 2 die seitlichen Streben 15 und 16. Das Rohrgestell 11 ist aus mehreren geradlinigen oder gebogenen Rohrabschnitten aus Stahl, Leichtmetall oder dgl. gefertigt.

Die das Rohrgestell 11 umfangseitig umspannende Hülle 12 ist aus luftundurchlässigem, etwa bis 130°C temperaturbeständigem Werkstoff gefertigt und endseitig vorzugsweise an beiden Rahmenabschnitten 17, 18 fixiert. Die an beiden Enden offene Hülle 12 ist aus einem stoffähnlichen ein- oder mehrlagigem Gewebe, aus Synthesekautschuk oder dgl. gefertigt.

Der Luftführungskanal kann nach der Erfindung auch ohne Gestell nur mit einem Stützelement Verwendung finden. In diesem Fall ist das den Kanal bildende Material zwischen Kühler und Karosserie gespannt, so daß sich der Kanal dazwischen ergibt. Erfindungsgemäß kann die Hülle 12 auch mit Gummibändern als Stützelement versehen sein, die entweder in die Hülle integriert sind oder als innere oder äußere Stütze angeordnet sind.

## Patentansprüche

1. Luftführungskanal für ein Kraftfahrzeug, der sich zwischen zumindest einer an einem Karosserieaußenhautteil (2) ausgebildeten Lufteintrittsöffnung (3) und einem mit Abstand dazu angeordneten Kühler (9) erstreckt, **dadurch gekennzeichnet, dass** der Luftführungskanal (10) aus einem gespannten, den Kanal (10) bildenden Material besteht und ein Stützelement umfasst, das mit einer Hülle (12) aus einem wärmefesten und luftundurchlässigen Material bespannt ist und das Stützelement ein die Hülle (1) abstützendes Rohrgestell (11) umfasst, das zwei beabstandet angeordnete, über Streben (13, 14, 15, 16) miteinander verbundene endseitige Rahmenabschnitte (17, 18) aufweist, wobei der eine Rahmenabschnitt (18) dem Kühler (9) und der andere Rahmenabschnitt (17) dem Fahrzeugbug zugerichtet ist.

2. Luftführungskanal nach Anspruch 1, **dadurch gekennzeichnet, daß** die Hülle (12) aus einem stoffähnlichen Gewebe gefertigt ist.

3. Luftführungskanal nach Anspruch 1, **dadurch gekennzeichnet, daß** die Hülle (12) aus Synthesefaser besteht.

4. Luftführungskanal nach den Ansprüchen 1 bis 3, **dadurch gekennzeichnet, daß** das Material der Hülle (12) bis ca. 130°C temperaturbeständig ist.

## Claims

1. An air duct for a motor vehicle, which air duct extends between at least one air inlet opening (3), formed in a body outer skin part (2), and a radiator (9) arranged with spacing from said air inlet opening (3), **characterised in that** the air duct (10) is made from a taut material forming the duct (10) and comprises a supporting member provided with a covering (12) of a heat-resistant and air-impermeable material, and the supporting member comprises a tubular framework (11) which supports the covering (1) and has two end frame portions (17, 18) which are arranged spaced apart and are connected to one another by struts (13, 14, 15, 16), wherein the one frame portion (18) faces the radiator (9) and the other frame portion (17) faces the front end of the vehicle.

2. An air duct according to claim 1, **characterised in that** the covering (12) is manufactured from a cloth-type fabric.

3. An air duct according to claim 1, **characterised in that** the covering (12) is made of synthetic fibre.

4. An air duct according to claims 1 to 3, **characterised in that** the material of the covering (12) is temperature-resistant up to approximately 130°C.

## Revendications

1. Conduit de guidage d'air pour un véhicule automobile, qui s'étend entre au moins un orifice d'admission d'air (3), réalisé dans une carrosserie extérieure (2) de la caisse du véhicule, et un radiateur (9), situé à distance dudit orifice, **caractérisé en ce que** le conduit de guidage d'air (10) est réalisé dans un matériau tendu formant le conduit (10) et comporte un élément de support qui est recouvert par un enveloppe (12) réalisée en matériau résistant à la chaleur et imperméable à l'air, et l'élément de support comporte une ossature tubulaire (11), qui supporte l'enveloppe (12) et qui comporte deux parties (17, 18), écartées l'une de l'autre et reliées l'une à l'autre au niveau de leurs extrémités par des entretoises (13, 14, 15, 16), l'une des parties d'ossature (18) étant orientée vers le radiateur (9) et l'autre partie d'ossature (17) étant orientée vers l'avant du véhicule.

2. Conduit de guidage d'air selon la revendication 1, **caractérisé en ce que** l'enveloppe (12) est réalisée dans un textile du type tissu.

3. Conduit de guidage d'air selon la revendication 1, **caractérisé en ce que** l'enveloppe (12) est réalisée en fibres synthétiques.

4. Conduit de guidage d'air selon l'une quelconque des revendications 1 à 3, **caractérisé en ce que** le matériau de l'enveloppe (12) résiste à des températures allant jusqu'à environ 130°C.
